# EUROPEAN PATENT APPLICATION

(11) **EP 2 573 151 A1**
(43) Date of publication of application: **27.03.2013**
(21) Application number: 11783457.2
(22) Date of filing: 13.05.2011
(51) Int. Cl.: C09J 7/00, C09J 9/00, C09J 11/00, C09J 133/00

(54) **THERMALLY CONDUCTIVE ADHESIVE SHEET**

(30) Priority: 19.05.2010 JP 2010115604; 19.05.2010 JP 2010115603
(71) Applicant: Nitto Denko Corporation, Osaka 567-8680 (JP)
(72) Inventor: NAKAYAMA, Junichi, Ibaraki-shi Osaka 567-8680 (JP); TSUKAGOSHI, Tatsuya, Ibaraki-shi Osaka 567-8680 (JP); TERADA, Yoshio, Ibaraki-shi Osaka 567-8680 (JP); SHOUJI, Akira, Ibaraki-shi Osaka 567-8680 (JP); FURUTA, Kenji, Ibaraki-shi Osaka 567-8680 (JP); TOJO, Midori, Ibaraki-shi Osaka 567-8680 (JP)
(74) Representative: Stolmár & Partner
(86) International application number: PCT/JP2011/061064
(87) International publication number: WO 2011/145523

(57) **Abstract**

An object is to provide a thermally conductive adhesive sheet capable of making a heat generating body and a heat radiating body adhere to each other easily and with a sufficient adhesive force. Provided is a thermally conductive adhesive sheet including an adhesive agent layer formed by molding a thermally conductive adhesive agent composition including an acrylic polymer component is 1 into a sheet-like shape, wherein the adhesive force at the time of 180° peeling is 1 N/20 mm or more and the contact thermal resistance is 0.6 cm²·K/W or less when the adhesive sheet is pressure bonded to an adherend with a pressure of 200 kPa.

## Description

### TECHNICAL FIELD

The present invention relates to an adhesive sheet improved in the thermal conductivity thereof.

### BACKGROUND ART

There has hitherto been an adverse possibility that heat generating bodies such as heat generating machines and heat generating electronic parts are broken or degraded in performances when heat is accumulated in the interior thereof. Accordingly, it has hitherto been attempted to maintain the performances and to prevent the breakage of such machines and electronic parts by allowing heat radiating bodies to adhere onto the surface of heat generating bodies such as electronic parts and by thus radiating heat to the outside.

As a method for a heat generating body and a heat radiating body to be made to adhere to each other, double-sided adhesive sheets having thermal conductivity are widely used. As the thermally conductive double-sided adhesive sheet, known is a thermally conductive double-sided adhesive sheet in which an adhesive agent layer itself constituted with a resin composition has thermal conductivity. As another thermally conductive double-sided adhesive sheet, known is a thermally conductive double-sided adhesive sheet the thermal conductivity of which is more improved by including a thermally conductive substance in the adhesive agent layer than the case where the adhesive agent layer is constituted with a resin composition composed of a single substance. In such a thermally conductive adhesive sheet, it is possible to effectively transfer the heat of the heat generating body bonded to one side of the thermally conductive adhesive sheet to the heat radiating body bonded to the other side of the thermally conductive adhesive sheet.

There has also been proposed a thermally conductive adhesive sheet with a heat radiating body attached thereto in which the heat radiating body and the thermally conductive adhesive sheet are integrated. For example, there has been proposed an integrated adhesive sheet in which a metal foil having a predetermined thickness is used as heat radiating body, and an adhesive agent layer having thermal conductivity is formed on one side of the metal foil (see Patent Document 1).

Moreover, examples of the method for a heat generating body and a heat radiating body to be made to adhere to each other include a method using a heat release grease having thermal conductivity. The heat release grease is a paste-like material including silicone, a thermally conductive substance and the like. Such a heat release grease is applied to between a heat generating body and a heat radiating body and cured, and thus the heat generating body and the heat radiating body are made to adhere to each other.

### PRIOR ART DOCUMENTS

### PATENT DOCUMENT

Patent Document 1: Japanese Patent Laid-Open No. Hei-11-186473

### DISCLOSURE OF THE INVENTION

### PROBLEMS TO BE SOLVED BY THE INVENTION

Such a thermally conductive (double-sided) adhesive sheet (hereinafter, described as an adhesive sheet) as described above is formed in a sheet shape, and hence is easier to handle as compared to the heat release grease. However, when the adhesive sheet is bonded to the heat generating body or the heat radiating body (hereinafter, also described as an adherend), air intervenes between the adhesive sheet and the adherend due to the effects such as the effect of the surface roughness of the adhesive sides as the case may be (in other words, the adherend and the adhesive sheet cannot be made to adhere to each other with no space therebetween, as the case may be).

In such a case, in the legion where air intervenes, the heat transfer between the adherend and the adhesive sheet occurs through the air layer, and hence thermal resistance (contact thermal resistance) is created between the adhesive sheet and the adherend. Consequently heat transfer is not efficiently conducted between the adhesive sheet and the adherend, and hence it becomes difficult to effectively transfer the heat of the heat generating body to the heat radiating body and to cool the heat generating body.

On the other hand, the heat release grease tends to be easily adapted to the surface of the adherend, and is used as applied to the adherent, and hence air is less likely to intervene between the heat release grease and the adherend. However, the heat release grease requires an operation to apply the heat release grease to the adherend, and at the same time, needs a considerable time to be cured; hence, as compared to the adhesive sheet, the heat release grease needs more time and labor for the operation to allow the heat generating body and the heat radiating body to adhere to each other. Additionally, the heat release grease has insufficient adhesive force to the adherend, and in particular, at a high temperature, the heat release grease is removed from the adherend as the case may be.

Accordingly, it is an object of the present invention to provide a thermally conductive adhesive sheet capable of making a heat generating body and a heat radiating body adhere to each other easily and with a sufficient adhesive force, and at the same time, being excellent in thermal conductivity.

### MEANS FOR SOLVING PROBLEMS

According to one aspect of the present invention, there is provided a thermally conductive adhesive sheet including an adhesive agent layer formed by molding a thermally conductive adhesive agent composition including an acrylic polymer component into a sheet-like shape, wherein the adhesive force at the time of 180° peeling is 1 N/20 mm or more and the contact thermal resistance is 0.6 cm²·K/W or less when the adhesive sheet is pressure bonded to an adherend with a pressure of 200 kPa.

According to such a constitution, the contact thermal resistance is 0.6 cm².K/W or less when the thermally conductive adhesive sheet is pressure bonded to an adherend with a pressure of 200 kPa, and thus the amount of the air intervening between the thermally conductive adhesive sheet and the adherend is reduced. Accordingly; the contact area between the thermally conductive adhesive sheet the adherend is increased, and the heat transfer between the thermally conductive adhesive sheet and the adherend is effectively performed. In other words, the thermally conductive adhesive sheet becomes a thermally conductive adhesive sheet excellent in thermal conductivity. Consequently, the heat of the heat generating body bonded to one side of the adhesive sheet can be effectively transferred to the heat radiating body bonded to the other side of the adhesive sheet, and thus the cooling of the heat generating body can be effectively performed. The adhesive force at the time of 180° peeling being 1 N/20 mm or more allows the thermally conductive adhesive sheet to be a thermally conductive adhesive sheet having a sufficient adhesive force to the adhered.

The total thermal resistance is preferably 8.0 cm²·K/W or less when the thermally conductive adhesive sheet is pressure bonded with a pressure of 200 kPa to an adherend.

According to such a constitution, the total thermal resistance being 8. 0 cm²·K/W or less allows the heat transfer between the thermally conductive adhesive sheet and the adherend to be effectively performed. Accordingly, the heat of the heat generating body bonded to one side of the thermally conductive adhesive sheet can be effectively transferred to the other side and thus the heat generating body can be cooled. The total thermal resistance as referred to herein means the total of the thermal resistance of the thermally conductive adhesive sheet itself and the contact thermal resistance.

The adhesive agent layer preferably has a loss elastic modulus G" at 50°C of 5 × 10⁵ Pa or less.

According to such a constitution, the loss elastic modulus G" of the adhesive agent layer at 50°C being 5 × 10⁵ Pa allows the adaptability of the adhesive agent layer to the surface of the heat generating body and the heat radiating body to be satisfactory. Consequently, the contact area between the thermally conductive adhesive sheet and the adherend can be sufficiently ensured, and hence the contact thermal resistance can be decreased.
Specifically, the adhesive agent layer of the thermally conductive adhesive sheet bonded to the adherend such as the heat generating body or the heat radiating body is heated to such a temperature as described above by the heat of the adherend. Thus, the loss elastic modulus G" of the heated adhesive agent layer is such a value as described above (a relatively low value), and hence the adaptability of the adhesive agent layer to the surface of the adherend is made satisfactory. Consequently, the intervention of air between the thermally conductive adhesive sheet and the adherend can be suppressed, and hence the contact area between the thermally conductive adhesive sheet and the adherend is sufficiently ensured. Accordingly, the contact thermal resistance can be decreased.

The present inventors have discovered that by setting the complex modulus of elasticity G* of the adhesive agent layer to fall within a predetermined range, the contact thermal resistance can be decreased.

Specifically, according to another aspect of the present invention, there is provided a thermally conductive adhesive sheet including an adhesive agent layer formed by molding a thermally conductive adhesive agent composition including a thermally conductive substance and an acrylic polymer component into a sheet-like shape, wherein the complex modulus of elasticity G* of the adhesive agent layer at 100°C is 1.0 × 10⁴ to 1.0 × 10⁶ Pa.

According to such a constitution, the complex modulus of elasticity G* of the adhesive agent layer at 100°C set to be 1.0 × 10⁴ to 1.0 × 10⁶ Pa allows the adhesive agent layer to become flexible, and hence when the thermally conductive adhesive sheet is pressure bonded to an adherend, the adhesive side of the adhesive agent layer is made to be easily adaptable to the surface of the adherend. Consequently, the intervention of air between the adhesive agent layer and the adherend can be suppressed, and hence the contact area between the thermally conductive adhesive sheet and the adherend can be increased. Specifically, the contact thermal resistance is decreased, and hence the heat transfer between the adherend and the thermally conductive adhesive sheet is effectively performed. In other words, the thermally conductive adhesive sheet becomes a thermally conductive adhesive sheet excellent in thermal conductivity. Consequently, the heat of the heat generating body bonded to one side of the thermally conductive adhesive sheet can be effectively transferred to the heat radiating body bonded to the other side, and thus the cooling of the heat generating body can be performed.

The thermally conductive adhesive sheet according to the present invention preferably has a thermal conductivity of 0.5 W/m·K or more.

### ADVANTAGES OF THE INVENTION

As described above, according to the present invention, it is possible so allow the heat generating body and the heat radiating body to adhere to each other easily with a sufficient adhesive force, and the thermally conductive adhesive sheet becomes a thermally conductive adhesive sheet excellent in thermal conductivity.

### BRIEF DESCRIPTION OF DRAWINGS

Fig. 1 is a schematic view illustrating the condition for performing a retention property in Examples.
Fig. 2(a) is a schematic front view illustrating the apparatus used for measuring the contact thermal resistance in Examples, and Fig. 2(b) is a schematic side view of the apparatus shown in Fig. 2 (a).

### DESCRIPTION OF EMBODIMENTS

Hereinafter, the preferred embodiments of the present invention are described.

The thermally conductive adhesive sheet according to the present invention is disposed between a heat generating body and a heat radiating body, and is constituted in such a way that the thermally conductive adhesive sheet allows the heat generating body and the heat radiating body to adhere to each other, and at the same time, the heat of the heat generating body is transferred to the heat radiating body. Specifically, the thermally conductive adhesive sheet includes an adhesive agent layer prepared by forming a thermally conductive adhesive agent composition including an acrylic polymer component into a sheet-like shape. Examples of the thermally conductive adhesive sheet include a thermally conductive adhesive sheet in which the thermal conductivity is improved by including a thermally conductive substance in the adhesive agent layer as compared to the case where no thermally conductive substance is included in the adhesive agent layer, and a thermally conductive adhesive sheet constituted so as to have thermal conductivity even without including a thermally conductive substance.

Also, examples of the thermally conductive adhesive sheet include a thermally conductive adhesive sheet in which the thermally conductive adhesive agent composition itself retains a sheet-like shape so as to form the sheet adhesive agent layer, and a thermally conductive adhesive sheet in which the adhesive agent layer is formed by laminating in a sheet-like shape the thermally conductive adhesive agent composition on a support such as a resin film.

In the thermally conductive adhesive sheet of the present invention, the contact thermal resistance is 0.6 cm²·K/W or less and preferably 0.5 cm²·K/W or less when the thermally conductive adhesive sheet is pressure bonded with a pressure of 200 kPa to the adherends (the heat generating body and the heat radiating body). The contact thermal resistance as referred to herein means the thermal resistance arising between the thermally conductive adhesive sheet and the adherend due to the intervention of air between the thermally conductive adhesive sheet and the adherend as a consequence of the effects such as the effect of the surface roughness of the adhesive side of the thermally conductive adhesive sheet (specifically the adhesive agent layer).

The total thermal resistance is preferably 8.0 cm²·K/W or less and more preferably 7.0 cm²·K/W or less when the thermally conductive adhesive sheet is pressure bonded with a pressure of 200 kPa to the adherend. The total thermal resistance as referred to herein means the total of the thermal resistance of the thermally conductive adhesive sheet itself and the contact thermal resistance.

The thermally conductive adhesive sheet of the present invention has excellent thermal conductivity due to such a contact thermal resistance as described above. Specifically, the thermally conductive adhesive sheet preferably has a thermal conductivity of 0.5 W/m·K or more. With such a thermal conductivity as described above, even when the thermally conductive adhesive sheet is used as allowed to adhere to, for example, a heat sink of a semiconductor module, a sufficient thermal conductivity can be exhibited.

The thermally conductive adhesive sheet of the present invention is constituted in such a way that the complex modulus of elasticity G* of the adhesive agent layer at 100°C is 1.0 × 10⁴ to 1.0 × 10⁶ Pa, preferably 5.0 × 10⁴ to 8.0 × 10⁵ Pa and more preferably 7.0 × 10⁴ to 6.0 × 10⁵ Pa. The lower limit of the complex modulus of elasticity G* set as described above allows the adhesion performance (in particular, the cohesive force) of the adhesive agent layer to be satisfactory.

The upper limit of the complex modulus of elasticity G* set as described above allows the adhesive agent layer to be flexible and allows the adhesive agent layer to be easily adaptable to the surface of the adherend. Consequently, when the thermally conductive adhesive sheet is pressure bonded to the adherend, the intervention of air between the thermally conductive adhesive sheet and the adherend can be suppressed and the contact thermal resistance can be decreased.
The measurement methods of the total thermal resistance, the contact thermal resistance and the complex modulus of elasticity G* are as shown in following Examples.

In the thermally conductive adhesive sheet of the present invention, the loss elastic modulus G" of the adhesive agent layer at the time of heating becomes low. Specifically, the loss elastic modulus G" of the thermally conductive adhesive sheet at 50°C is preferably 5 × 10⁵ Pa or less and more preferably 4 × 10⁵ Pa or less. The loss elastic modulus G" set to be as described above enables the contact area between the adhesive agent layer and the adherend to be sufficiently ensured, and hence enables the contact thermal resistance to be decreased. In particular, when the thermally conductive adhesive sheet is bonded to the heat generating body or the heat radiating body, the adhesive agent layer is heated so as to be easily adaptable to the surface of the heat generating body or the heat radiating body. Consequently, the intervention of air between the thermally conductive adhesive sheet and the adherend can be suppressed, and thus, the contact thermal resistance can be decreased.
The loss elastic modulus G" is preferably 1 × 10³ Pa or more and more preferably 1 × 10³ Pa or more. With the loss elastic modulus G" set as described above, the thermally conductive adhesive sheet becomes a thermally conductive adhesive sheet having a satisfactory heat resistance. The loss elastic modulus G" is a value derived by performing the dynamic viscoelastic measurement, and specifically derived by the method shown in following Examples.

The acrylic polymer component is not particularly limited, and commonly used acrylic polymers can be used as the acrylic polymer component. As the acrylic polymer, the polymers constituted with the (meth)acryhc monomers represented by the following general formula (1) as the monomer units can be used.

[Formula 1] CH₂=C(R¹)COOR² (1)

In the foregoing general formula (1), R¹ is a hydrogen atom or a methyl group. In the foregoing general formula (1), for the purpose of ensuring tack feeling, R² is an alkyl group having preferably 2 to 14 carbon atoms, more preferably 3 to 12 carbon atoms and furthermore preferably 4 to 9 carbon atoms. As the alkyl group represented by R², either of a linear alkyl group and a branched alkyl group can be used. In particular, as the alkyl group represented by R², a branched alkyl group leading to a low glass transition point is preferably used.

Examples of the (meth)acrylic monomer represented by the general formula (1) include: ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate and phenoxyethyl (meth)acrylate.

In the present invention, the (meth)acrylic monomers represented by the foregoing general formula (1) may be used each alone or as mixtures of two or more thereof. The total content of the aforementioned (meth)acrylic monomers is preferably 50 to 100% by weight, more preferably 60 to 98% by weight and furthermore preferably 70 to 90% by weight in relation to the total amount of the monomers constituting the acrylic polymer. In particular, by setting the content of the (meth)acrylic monomer(s) (preferably, acrylic acid ester(s) having an alkyl group of 12 to 14 carbon atoms) to be 50% by weight or more, the thermally conductive adhesive sheet becomes a thermally conductive adhesive sheet having satisfactory adhesiveness.

The acrylic polymer may include, as the monomer units, polar group-containing monomers such as a hydroxyl group-containing monomer and a carboxyl group-containing monomer. The content of the polar group-containing monomer(s) is preferably 0 to 20% by weight, more preferably 0.2 to 10% by weight and furthermore preferably 0.2 to 7% by weight in relation to the total amount of the monomers constituting the acrylic polymer. The content of the polar group-containing monomer(s) set to fall within the aforementioned range allows the cohesive force to be exhibited more sufficiently. The content of the polar group-containing monomer(s) set to be 20% by weight or less allows the adhesive agent layer to have a satisfactory adhesiveness.

The hydroxyl group-containing monomer means a polymerizable monomer having one or more hydroxyl groups in the monomer structure thereof. Examples of the hydroxyl group-containing monomer include: 2-hydroxyethyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, N-hydroxy (meth)acrylamide, vinyl alcohol, allyl alcohol, 2-hydroxyethyl vinyl ether, 4-hydroxybutyl vinyl ether and diethylene glycol monovinyl ether. Among these, 4-hydroxybutyl (meth)acrylate, 6-hydroxyhexyl (meth)acrylate and the like are preferably used.

The carboxyl group-containing monomer means a polymerizable monomer having one or more carboxyl groups in the monomer structure thereof. Examples of the carboxyl group-containing monomer include acrylic acid, methacrylic acid, carboxyethyl (meth)acrylate, carboxypentyl (meth)acrylate, itaconic acid, maleic acid, fumaric acid and crotonic acid. Among these, acrylic acid and methacrylic acid are preferably used.

For the acrylic polymer in the present invention, as the monomers other than the aforementioned monomers, polymerizable monomers to regulate the glass transition point and the release property of the acrylic polymer and like monomers can be used within ranges not impairing the advantageous effects of the present invention.

As the other polymerizable monomers used in the acrylic polymer of the present invention, for example, cohesive force or heat resistance improving components, and components having functional groups functioning as base points for adhesive force improvement or as cross-linking base points can be appropriately used. Examples of the cohesive force and heat resistance improving components include sulfonic acid group-containing monomers, phosphoric acid group-containing monomers, cyano group-containing monomers, vinyl ester monomers and aromatic vinyl monomers. Examples of the components having functional groups functioning as base points for adhesive force improvement or as cross-linking base points include amide group-containing monomers, amino group-containing monomers, imide group -containing monomers, epoxy group-containing monomers and vinyl ether monomers. Moreover, the monomers in which R² in the foregoing general formula (1) is an alkyl group having 1 or 15 or more carbon atoms and other monomers can be appropriately used. These monomer compositions may be used each alone or as mixtures of two or more thereof.

Examples of the sulfonic acid group-containing monomers include styrene sulfonic acid, allyl sulfonic acid, 2-(meth)acylamido-2-methylpropanesulfonic acid, (meth)acrylamidopropanesulfonic acid, sulfopropyl (meth)acrylate and (meth)acryloyloxynaphthalenesulfonic acid.

Examples of the phosphoric acid group-containing monomers include 2-hydroxyethylacryloyl phosphate.

Examples of the cyano group-containing monomers include acrylonitrile and methacrylonitrile.

Examples of the vinyl ester monomers include vinyl acetate, vinyl propionate, vinyl laurate vinylpyrrolidone.

Examples of the aromatic vinyl monomers include styrene, chlorostyrene, chloromethylstyrene and α-mothylstyrene,

Examples of the amide group-containing monomers include (meth)acrylamide, N,N-dimethyl (meth)acrylamide, N,N-diethyl (meth)acrylamide, N,N-diethyl methacrylamide, N-isopropyl (meth)acrylamide, N-methylol (meth)acrylamide, N-methoxymethyl (meth)acrylamide, N-butoxymethyl (meth)acrylamide, dimethylaminoethyl (meth)acrylate, t-butylaminoethyl (meth)acrylate, diacetone (meth)acrylamide, N-vinylacetamide, N,N'-methylene bis(meth)acrylamide, N,N-dimethylaminopropyl (meth)acrylamide, N-vinylcaprolactam and N-vinyl-2-pyrrolidone.

Examples of the amino group-containing monomers include aminoethyl (meth)acrylate, N,N-dimethylaminoethyl (meth)acrylate, N,N-dimethylaminopropyl (meth)acrylate and N-(meth)acryloyl morpholine.

Examples of the imide group-containing monomers include N-cyclohexyl maleimide, N-phenyl maleimide, N-methyl maleimide,N-ethyl maleimide, N-propyl maleimide, N-isopropyl maleimide, N-butyl maleimide and itacon imide.

Examples of the epoxy group-containing monomers include glycidyl (meth)acrylate and allyl glycidyl ether.

Examples of the vinyl, ether monomers include methyl vinyl ether, ethyl vinyl ether and isobutyl vinyl ether.

Examples of the (meth)acrylic monomers having an alkyl group having 1 or 15 or more carbon atoms include methyl (meth)acrylate, pentadecyl (meth)acrylate, hexadecyl (meth)acrylate and octadecyl (meth)acrylate.

The monomers constituting the acrylic polymer may include, if necessary, other polymerizable monomers for the purpose of upgrading the properties such as cohesive force. Examples of such copolymerizable monomers include vinyl compounds, (meth)acrylic acid esters of cyclic alcohols and (meth)acrylic acid esters of polyhydric alcohols. Examples of the vinyl compounds include vinyl acetate, styrene and vinyltoluene. Examples of the (meth)acrylic acid esters of cyclic alcohols include cyclopentyl di(meth)acrylate and isobornyl (meth)acrylate, Examples of the (meth)acrylic acid esters of polyhydric alcohols include neopentylglycol di(meth)acrylate, hexanediol di(meth)acrylate, propyleneglycol di(meth)acrylate, trimethylolpropane tri(meth)acrylate, tetramethylolmethane tri(meth)acrylate and dipentaerythritol hexa(meth)acrylate.

The other coplymerizable monomers may be used each alone or as mixtures of two or more thereof. The total content of the other copolymerizable monomer(s) is preferably 0 to 50% by weight, more preferably 0 to 35% by weight and furthermore preferably 0 to 25% by weight in relation to the total amount of the monomers constituting the acrylic polymer.

The weight average molecular weight of the acrylic polymer is preferably 600,000 or more, more preferably 700,000 to 3,000,000 and furthermore preferably 800,000 to 2,500,000. The weight average molecular weight of 600,000 or more allows the adhesive agent layer to have a satisfactory durability. From the viewpoint of workability the weight average molecular weight is preferably 3,000,000 or less. The weight average molecular weight as referred to herein means a value as measured by GPC(gel permeation chromatography) and derived relative to polystyrene standards.

For the purpose of achieving satisfactory adhesiveness of the adhesive agent layer, the glass transition temperature (Tg) of the acrylic polymer is -5°C or lower and preferably -10°C or lower. The glass transition temperature of -5°C or lower results in a satisfactory fluidity of the acrylic polymer to allow the adhesive agent layer to have a sufficient wettability to the adherend. Consequently, the thermally conductive adhesive sheet becomes a thermally conductive adhesive sheet having a satisfactory adhesive force. In other words, the loss elastic modulus G" of the adhesive agent layer can be made low, and hence the thermally conductive adhesive sheet becomes a thermally conductive adhesive sheet having a satisfactory adhesive force. The glass transition temperature (Tg) of the acrylic polymer can be regulated so as to fall within the aforementioned range by appropriately varying the components and the composition ratios of the monomers used.

Such an acrylic polymer can be produced by heretofore known production methods such as solution polymerization, bulk polymerization, emulsion polymerization, photopolymerization and various radical polymerizations. The obtained acrylic polymer may be either a homopolymer or a copolymer. When the obtained acrylic polymer is a copolymer, the copolymer may be any of a random copolymer, a block copolymer, a graft copolymer and the like.

In a solution polymerization, for example, ethyl acetate, toluene and the like are used as a polymerization solvent. A specific example of the solution polymerization is such that the reaction is performed in a flow of an inert gas such as nitrogen, by using 0.01 to 0.2 part by weight of azobisisobutyronitrile as a polymerization initiator in relation to 100 parts by weight of the total amount of the monomers, usually at approximately 50 to 70°C for approximately 8 to 30 hours.

The polymerization initiator, a chain transfer agent, an emulsifier and the like used in the radical polymerization are not particularly limited, and can be used in an appropriately selected manner.

Examples of the polymerization initiator include azo initiators, persulfate initiators, peroxide initiators and redox initiators; however, the polymerization initiator used in the present invention is not limited to these. Examples of the azo initiators include 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropioneamidine) disulfate, 2,2'-azobis(N,N'-dimethyleneisobutylamidine) and 2,2'-azobis[N-(2-carboxyethyl)-2-methylpropioneamidine] hydrate (VA-057, manufactured by Wako Pure Chemical Indusitres, Ltd.). Examples of the persulfate initiators include salts of persulfuric acid such as potassium persulfate and ammonium persulfate. Examples of the peroxide initiators include di(2-ethylhexyl) peroxydicarbonate, di(4-t-butylcyclohexyl) peroxydicarbonate, di-see-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, t-butylperoxy isobutyrate, 1,1-di(t-hexylperoxy)cyclohexane, t-butyl hydroperoxide and hydrogen peroxide. Examples of the redox initiators include a combination of a salt of persulfuric acid and a sodium bisulfite and a combination of a peroxide and a reducing agent such as a combination of a peroxide and sodium ascorbate.

The polymerization initiators may be used each alone or as mixtures of two or more thereof. The total amount of the polymerization initiators is preferably approximately 0.005 to 1 part by weight and more preferably approximately 0.02 to 0.5 parts by weight in relation to 100 parts by weight of the monomer(s).

In the present invention, a chain transfer agent may also be used in polymerization. The use of the chain transfer agent allows the molecular weight of the acrylic polymer to be appropriately regulated.

Usable examples of the chain transfer agent include lauryl mercaptan, glycidyl mercaptan, mercaptoacetic acid, 2-mercaptoethanol, thioglycolic acid, 2-ethylhexyl thioglycolate and 2,3-dimercapto-1-propanol.

These chain transfer agents may be used each alone or as mixtures of two or more thereof. The total content of the chain transfer agent(s) is usually approximately 0.01 to 0.1 parts by weight in relation to 100 parts by weight of the monomer(s).

Usable examples of emulsifiers used in performing emulsion polymerization include anionic emulsifiers and nonionic emulsifiers. Examples of the anionic emulsifiers include sodium laurylsulfate, ammonium laurylsulfate, sodium dodecylbenzenesulfonate, ammonium polyoxyethylene alkyl ether sulfate and sodium polyoxyethylene alkylphenyl ether sulfate. Examples of the nonionic emulsifiers include polyoxyethylene alkyl ether, polyoxyethylene alkylphenyl ether, polyoxyethylene fatty acid ester and polyoxyethylene-polyoxypropylene block polymer. These emulsifiers may be used each alone or in combinations of two or more thereof.

Moreover, as reactive emulsifiers, it is possible to use emulsifiers into which a radical polymerizable functional group such as a propenyl group or an allyl ether group is introduced, Examples of such an emulsifier include: Aquaron HS-10, HS-20, KH-10, BC-05, BC-10, BC-20 (the foregoing are all manufactured by Dai-ichi Kogyo Seiyaku Co., Ltd.) and Adeka Reasoap SE10N (manufactured by Adeka Corp.). The reactive emulsifier is incorporated into the polymer chain after polymerization, and hence can improve the water resistance of the adhesive agent layer. The amount of the emulsifier(s) used is, in relation to 100 parts by weight of the monomer(s), 0.3 to 5 parts by weight and preferably 0.5 to 1 part for the purpose of achieving satisfactory polymerization stability and mechanical stability.

The polymerization initiator (photopolymerization initiator), the chain transfer agent, the emulsifier and the like used when photopolymerization is applied are not particularly limited, and can be appropriately selected to be used.

The photopolymerization initiator is not particularly limited; usable examples of the photopolymerization initiator include benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzil-based photopolymerization initiators, benzophenone-based photopolymerization initiators, ketal-based photopolymerization initiators and thioxanthone-based photopolymerization initiators. These photopolymerization initiators may be used in combinations of a plurality thereof.

Specific examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether.
Specific examples of the acetophenone-based polymerization initiators include 2,2-diethoxyacetophenone, 2,2-dimethoxy-2-phenylacetophenone, 1-hydroxycyclobexyl phenyl ketone, 4-phenoxydichloroacetophenone and 4-t-butyl-dichloroacetophenone.
Specific examples of the α-ketol-based polymerization initiators include 2-methyl-2-hydroxypropiophenone and 1-[4-(2-hydroxyethyl)-phenyl] -2-hydroxy-2-methylpropan-1-one.
Specific examples of the aromatic sulfonyl chloride-based photopolymerization initiators include 2-naphthalenesalfonyl chloride,
Specific examples of the optically active oxime-based photopolymerization initiators include 1-phenyl-1,1-propanedione-2-(o-ethoxycarbonyl)-oxime,
Specific examples of the benzoin-based photopolymerization initiators include benzoin.
Specific examples of the benzil-based photopolymerization initiators include benzil.
Specific examples of the benzophenone-based photopolymerization initiators include benzophenone, benzoylbenzoic acid, 3,3'-dimethyl-4-methoxybenzophenone, polyvinyl benzophenone and α-hydroxycyclohexyl phenyl ketone.
Specific examples of the ketal-based photopolymerization initiators include benzil methyl ketal.
Specific examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and dodecylthioxanthone.

The content of the photopolymerization initiator can be selected, for example, preferably from a range from 0.001 to 5 parts by weight and more preferably from a range from 0.01 to 3 parts by weight in relation to 100 parts by weight of the total amount of the monomer components included in the thermally conductive adhesive agent composition.

When the photopolymerization initiator is activated, it is important to irradiate the thermally conductive adhesive agent composition including the photopolymerization initiator with an active energy light beam. Examples of such an active energy light beam include ionizing radiation and ultraviolet ray. In particular, ultraviolet ray is preferable. Examples of the ionizing radiation include α-ray, β-ray, γ-ray, neutron ray and electron beam. The irradiation energy, irradiation time and irradiation method of the active energy light beam are not particularly limited; it is only required that the polymerization initiator be activated and the reactions of the monomer components be allowed to proceed.

The thermally conductive adhesive agent composition including a photopolymerization initiator may include, if necessary, additives within appropriate ranges (for example, within a range not disturbing the photopolymerization reaction). Examples of such additives include a thickener, a thixotropic agent, an extending agent, a filler, a plasticizer, an antiaging agent, an antioxidant, a colorant (such as a pigment and a dye), a cross-hnking agent and a tackiffier. Examples of the thickener include acrylic rubber, epichlorohydrin rubber and butyl rubber. Examples of the thixotropic agent include colloidal silica and polyvinylpyrrolidone. Example of the extending agent include calcium carbonate, titanium oxide and clay. Examples of the filler include: inorganic hollow bodies (such as glass balloon, alumina balloon and ceramic balloon); organic hollow bodies (such as vinylidene chloride balloon and acrylic balloon); organic spheroid bodies (such as nylon bead, acrylic bead, silicone bead); monofilaments (such as monofilaments of polyester, rayon and nylon); and fine powders (such as fine powders of polyethylene and polypropylene). Examples of the cross-linking agent include hexanediol diacrylate (HDDA) and trimethylolpropane triacrylate (TMPTA).

For the purpose of improving the adhesive force and the durability of the adhesive agent layer, it is preferable to include a cross-linking agent as the component constituting the acrylic polymer in the thermally conductive adhesive agent composition. As the cross-linking agent, it is possible to use heretofore well known cross-linking agents such as isocyanate-based cross-hnking agents, epoxy-based cross-linking agents, melamine-based cross-linking agents, oxazoline-based cross-linking agents, carbodiimide-based cross-linking agents, aziridine-based cross-linking agents and metal chelate-based cross-linking agents. In particular, it is preferable to use an isocyanate-based cross-linking agent.

Examples of the isocyanate-based cross-linking agent include aromatic isocyanates, alicyclic isocyanates and aliphatic isocyanates. Examples of the aromatic isocyanate include tolylene diisocyanate and xylene diisocyanate. Examples of the alicyclic isocyanate include isophoronediisocyanate. Examples of the aliphatic isocyanate include hexamethylene di isocyanate.

More specifically, usable examples of the isocyanate-based cross-linking agents include lower aliphatic polyisocyanates, alicyclic isocyanates, aromatic diisocyanates and isocyanate adducts. Examples of the lower aliphatic polyisocyanates include butylene diisocyanate and hexamethylene diisocyanate. Examples of the alicyclic isocyanates include cyclopentylene diisocyanate, cyclohexylene diisocyanate and isophorone diisocyanate. Examples of the aromatic diisocyanates include 2,4-tolylene diisoeyamate, 4,4'-diphenylmethane diisocyanate, xylylene diisocyanate and polymethylene polyphenyl isocyanate. Examples of the isocyanate adducts include trimethylolpropane/tolylene diisocyanate trimer adduct (trade name: Coronate L, manufactured by Nippon Polyurethane Industry Co., Ltd.), trimethylolpropane/hexamethylene diisocyanate trimer adduct (trade name: Coronate HL, manufactured by Nippon Polyurethane Industry Co., Ltd.) and isocyanurate-modified hexamethylene diisocyanate (trade name: Coronate HX, manufactured by Nippon Polyurethane Industry Co., Ltd.). Also, polyether polyisocyanate and polyester polyisocyanate, and adducts of these with various polyols or the like can be used. Also, polyisocyanurates multifunctionalized with isocyanurate bonds, buret bonds, allophanate bonds and the like can be used.

The cross-linking agents may be used each alone or as mixtures of two or more thereof. The total amount of the cross-linking agent(s) is preferably 0.02 to 5 parts by weight, more preferably 0.04 to 3 parts by weight and furthermore preferably 0.05 to 2 parts by weight in relation to 100 parts by weight of the acrylic polymer. The use of the cross-linking agent(s) within the aforementioned range enables the adhesive agent layer to be more certainly improved in cohesive force and durability. The used amount of the cross-linking agent(s) set to be 2 parts by weight or less results in an appropriate crosslinkage formation to allow the adhesive agent layer to have satisfactory adhesiveness.

In the present invention, the addition amount of the cross-linking agent(s) is regulated in such a way that the gel fraction of the cross-linked thermally conductive adhesive agent composition is preferably 40 to 90% by weight, more preferably 50 to 85% by weight and furthermore preferably 55 to 80% by weight. The gel fraction set to be 40% by weight or more allows the adhesive agent layer to be improved in cohesive force and to have satisfactory durability. The gel fraction set to be 90% by weight or less decreases the loss elastic modulus G" and allows the adhesive agent layer to become an adhesive agent layer having satisfactory adhesiveness.

The gel fraction (% by weight) can be obtained as follows: a sample of a dry weight W1 (g) is sampled from the cross-linked thermally conductive adhesive agent composition, and immersed in ethyl acetate; then the insoluble matter of the sample is dried, then the weight W2 (g) of the insoluble matter is measured, and the gel fraction is derived from the formula (W2/W1) × 100.

The thermally conductive substance enables the thermal conductivity of the thermally conductive adhesive sheet to be improved through being induced in the adhesive agent layer. The thermally conductive substance which can be used in the present invention is not particularly limited however, examples of The thermally conductive substance used in the present invention include boron nitride, aluminum nitride, silicon nitride, gallium nitride, aluminum hydroxide, magnesium hydroxide, silicon carbide, silicon dioxide, aluminum oxide, titanium oxide, zinc oxide, tin oxide, copper oxide, oxide, antimonic acid-doped tin oxide, calcium carbonate, barium titanate, potassium titanate, copper, silver, gold, nickel, aluminum, platinum, carbon carbon tube (carbon nanotube), carbon fiber and diamond. Among these thermally conductive substances, boron nitride, aluminum hydroxide and aluminum oxide are preferably used because of being high in thermal conductivity and having electrical insulation property. These thermally conductive substances may be used each alone or in combinations of two or thereof.

The shapes of the thermally conductive substances used in the present invention are not particularly limited, and may be bulk, needle-like, plate-like or layer-like. The bulk shape includes, for example, a spherical shape, a rectangular parallelepiped, a crushed shape and variant shapes of these.

In the present invention, when the thermally conductive substance is of a bulk. (spherical) shape, the average primary particle size thereof is preferably 0.1 to 1000 µm, more preferably 1 to 100 µm and furthermore preferable 2 to 20 µm. The average primary particle size of 1000 µm or less can prevent the bulk thermally conductive substance from offering a cause for the occurrence of the thickness unevenness of the adhesive agent layer caused by the particle size of the granular thermally conductive substance exceeding the thickness of the adhesive agent layer, even when the adhesive agent layer is formed with a thickness of less than 1000 µm.
The average primary particle size is a volume-based value obtained by a particle size distribution measurement method based on a laser scattering method. Specifically, the average primary particle size is a value obtained by measuring the D50 value with a lager scattering particle size distribution analyzer.

When the thermally conductive substance is of a needle-like or plate-like shape, the maximum length thereof is preferably 0.1 to 1000 µm, more preferably 1 to 100 µm and furthermore preferably 2 to 20 µm. The maximum length set to be 1000 µm suppresses the mutual coagulation of the particles of the needle-like or plate-like thermally conductive substance, and hence the handling of the thermally conductive substance becomes easy. Moreover, the aspect ratios of these thermally conductive substances are preferably 1 to 10000 and more preferably 10 to 1000. The aspect ratio of the thermally conductive substance is represented by the ratio of long axis length/short axis length or by the ratio of long axis length/thickness for a needle-like crystal, and by the ratio of diagonal length/thickness or by the ratio of long side length/thickness for a plate-like crystal.

As such thermally conductive substances as described above, for example, commonly used thermally conductive substances can be used; for example, as boron nitride, "HP-40" manufactured by Mizushima Ferroalloy Co., Ltd. and "PT620" manufactured by Momentive Performance Materials Inc. can be used. As aluminum hydroxide, for example, "Hidilite H-32" and "Hidilite H-42" manufactured by Showa Denko K.K. can be used. As aluminum oxide, for example, "AS-50" manufactured by Showa Denko K.K. can be used. As magnesium hydroxide, for example, "KISUMA 5A" manufactured by Kyowa Chemical Industry Co., Ltd. can be used. As antimony-doped tin oxide, for example, "SN-100S," "SN-100P" and "SN-100D (aqueous dispersion)" manufactured by Ishihara Sangyo Kaisha, Ltd. can be used. As titanium oxide, for example, "TTO Series" manufactured by Ishihara Sangyo Kaisha, Ltd. can be used. As zinc oxide, for example, "ZnO-310," "ZnO-350" and "ZnO-410" manufactured by Sumitomo Osaka Cement Co., Ltd. can be used.

The used amount of the thermally conductive substance is set to be preferably 10 to 1000 parts by weight, more preferably 50 to 500 parts by weight and furthermore preferably 100 to 400 parts by weight in relation to 100 parts by weight of the acrylic polymer component. The used amount of the thermally conductive substance set to be 1000 parts by weight or less allows the adhesive agent layer to be an adhesive agent layer having a satisfactory flexibility and also having a satisfactory adhesive force. The used amount of the thermally conductive substance set to be 10 parts by weight or more can also impart a sufficient thermal conductivity to the adhesive agent layer.

When the thermally conductive adhesive agent composition is produced, a silane coupling agent can be used for the purpose of improving the affinity between the thermally conductive substance and the acrylic polymer or for the purpose of improving the adhesive force and the durability of the adhesive agent layers. The silane coupling agent is not particularly limited; heretofore known silane coupling agents can be used in an appropriately selected manner.

Examples of the silane coupling agent which can be used include: epoxy group-containing silane coupling agents, amino group-containing silane coupling agents, (meth)acryl group-containing silane coupling agents and isocyanate group-containing silane coupling agents. Examples of the epoxy group-containing silane coupling agents include 3-glycidoxypropyltrimethoxysilane, 3-glycidoxypropyltriethoxysilane, 3-glycidoxypropylmethyldiethoxysilane and 2-(3,4-epoxycyclohexyl) ethyltrimethoxysilane. Examples of the amino group-containing silane coupling agents include 3-aminopropyltrimethoxysilane, N-2-(aminoethyl)-3-aminopropylmethyldimethoxysilane and 3-triethoxysilyl-N-(1,3-dimethylbutylidene)propylamine. Examples of the (meth)acryl group-containing silane coupling agents include 3-acryloxypropyltrimethoxysilane and 3-methacryloxypropyltriethoxysilane. Examples of the isocyanate group-containing silane coupling agents include 3-isocyanate propyltriethoxysilane. The use of silane coupling agents as described above is preferable for the purpose of improving the durability. The silane coupling agents may be used each alone or as mixtures of two or more thereof.

The total content of the silane coupling agent(s) is set to be preferably 0.01 to 10 parts by weight, more preferably 0.02 to 5 parts by weight and furthermore preferably 0.05 to 2 parts by weight in relation to 100 parts by weight of the acrylic polymer. The use of the silane coupling agent(s) within the aforementioned range enables the cohesive force and durability to be more certainly improved. The content of the silane coupling agent(s) set to be 0.01 parts by weight or more enables the surface of the granular thermally conductive substance to be sufficiently coated to improve the affinity with the acrylic polymer. The content of the silane coupling agent(s) set to be 10 parts by weight or less allows the adhesive agent layer to have a satisfactory thermal conductivity.

When the thermally conductive adhesive agent composition is produced, a tackifier resin can be used for the purpose of improving the adhesive force and the durability of the adhesive agent layer. The tackifier resin is not particularly limited; heretofore known tackifier resins can be used in an appropriately selected manner. Usable examples of the tackifier resin include rosin-based resins, terpene-based resins, aliphatic petroleum resins, aromatic petroleum resins, copolymer petroleum resins, alicyclic petroleum resins, xylene resins and elastomers.

The content of the tackifier resin is preferably 10 to 100 parts by weight, more preferable 20 to 80 parts by weight and furthermore preferably 30 to 50 parts by weight in relation to 100 parts by weight of the acrylic polymer.

Although no detailed description is made here, the chemicals commonly used as rubber/plastic compounding chemicals (dispersant, antiaging agent, antioxidant, processing aid, stabilizer, antifoaming agent, flame retardant, thickener, pigment or the like) can be appropriately added to the thermally conductive adhesive agent composition, within the ranges not impairing the advantageous effect of the present invention, in addition to those chemicals as described above, such as the acrylic polymer component and the thermally conductive substance.

Next, description is made on the method for preparing the thermally conductive double-sided adhesive sheet by using the thermally conductive adhesive agent composition composed of such constitutional components as described above. In the following description, the case where a boron nitride particle is used as the thermally conductive substance is described.

First, description is made on a method for preparing a liquid thermally conductive adhesive agent composition (coating liquid) including the acrylic polymer component composed of such components as described above and the boron nitride particle in an aggregated state of 60 to 200 µm in average particle size.
The average primary particle size is a volume-based value obtained by a particle size distribution measurement method based on a laser scattering method. Specifically, the average primary particle size is a value obtained by measuring the D50 value with a laser scattering particle size distribution analyzer.

In the preparation of the coating liquid, a mixer capable of stirring under reduced pressure the boron nitride particles together with the acrylic polymer is used.
Also, if necessary, it is possible to include in the coating liquid a dispersant to improve the dispersibility of the boron nitride particle in relation to the acrylic polymer. From the viewpoint of the excellent improvement effect of the dispersibility of the boron nitride particle in relation to the acrylic polymer, it is preferable to use as the dispersant a dispersant including a compound having an amine number exceeding 0 mg KOH/g but not exceeding 35 mg KOH/g.

First, the boron nitride particle is placed in the mixer, and successively a fraction of a resin solution including the acrylic polymer and other components as dispersed in a solvent is placed in the mixer. Then, the resulting mixture is stirred under a reduced pressure of 1 to 20 kPa at normal temperature, and thus a particle size regulation step of making fine the boron nitride particle in the aggregated state is performed.

In this case, by performing the stirring without placing the whole amount of the resin solution required for the preparation of the thermally conductive adhesive agent composition, the mixture composed of the boron nitride particle and the resin solution is allowed to be in a high viscosity state, and thus the mixture can be stirred while a high shear stress is being exerted to the mixture.
Accordingly, the boron nitride particle in an aggregated state, undergoing the high shear stress undergoes disintegration of the aggregated state, and is made fine to a condition close to the primary particle. For example, the boron nitride particle is made fine to an average particle size of 3 µmor more and 20 µm or less.

More specifically, for example, it is possible to adopt a method in which the number of rotations of the mixer is set at 30 rpm or less and preferably set at a low-speed rotation of 10 to 20 rpm, and the stirring operation is continued until the viscosity of the mixture becomes such a level of viscosity that the whole boron nitride particles are dispersed in the resin solution and the attachment of the boron nitride particles to the stirring blade of the mixer is not observed.

Next, the residual quantity of the resin solution is added to the mixer, and the resulting mixture is stirred, for example, under a reduced pressure of 1 to 20 kPa at normal temperature. Consequently, the mixture is stirred under the condition that the viscosity of the mixture is lower than that in the foregoing particle size regulation step, and thus a particle size reregulation step is performed in which the boron nitride particle is once again fine.
In this case, if necessary, the particle size reregulation step can also be performed in a stepwise manner by dividing the residual quantity of the resin solution into several sub-quantities and by dividing the particle size reregulation step correspondingly into a plurality of sub-steps.

More specifically, for example, it is possible to adopt a method in which the number of rotations of the mixer is set at 20 to 50 rpm, namely at a number of rotations equal to or larger than that in the particle size regulation step, preferably at 20 to 30 rpm, and this stirring operation is continued to such an extent that the large aggregates are not visually observed.

In the particle size reregulation step, the shear stress is lower than in the particle size regulation step, and hence the boron nitride particle in the aggregated state is not made fine to a very small particle size. Accordingly, in the particle size reregulation step, the boron nitride particles having medium average particle sizes exceeding 20 µm but not exceeding 60 µm in terms of the average particle size are formed in a larger proportion than in the particle size regulation step.

In this way, by performing the particle size regulation step and one or more runs of the particle size reregulation step, the coating liquid can be made to have a condition such that the average particle size of the boron nitride particles in the coating liquid is 3 µm or more and 300 µm or less. Also, by performing the particle size regulation step and one or more runs of the particle size reregulation step, the particle size distribution of the boron nitride particles in the coating liquid can be made to have the proportions such that the particle sizes of 3 µm or and 20 µm or less account for 5 to 45% by volume, the particle sizes of more than 20 µm and 60 µm or less account for 30 to 70% by volume, and the particle sizes of more than 60 µm and 300 µm or less account four 10 to 40% by volume.

Next, description is made on a method for preparing the thermally conductive adhesive sheet by using the coating liquid prepared as described above. For example, after both sides of the support are each coated with the coating liquid to a predetermined thickness, the resulting coating liquid layers are dried to form the adhesive agent layers on the support, and thus a thermally conductive double-sided adhesive sheet with a support can be prepared.

Alternatively, a thermally conductive adhesive with a support may also be prepared as follows: the treated side of a release film in which one side is treated with a release agent (such as silicone) is coated with the coating liquid to a predetermined thickness and the resulting coating liquid layer is dried; then the release film is released and only the adhesive agent layer is laminated on each of both sides of the support, and thus a thermally conductive adhesive sheet with a support is prepared.

Further alternatively, a thermally conductive double-sided adhesive sheet composed only of an adhesive agent layer may also be prepared by coating the treated side of the release film with the coating liquid to a predetermined thickness and by drying the resulting coating liquid layer.

As the method for coating the coating liquids onto the support or the release films in a predetermined thickness, the methods having hitherto been widely used can be adopted. Usable examples of such coating methods include roll coating, kiss-roll coating, gravure coating, reverse coating, roll brush coating, spray coating, dip roll coating, bar coating, knife coating, air-knife coating, curtain coating, lip coating and extrusion coating using a die coater or the like.

Examples of the support include plastic base materials such as polyethylene terephthalate (PET) and polyester films; porous materials such as paper and non-woven fabric; and metal foils.

The plastic base material is not particularly limited as long as the plastic base material can be formed into a sheet shape or a film shape; examples of the plastic base material which can be used include polyolefin film, polyester film, polyamide film, polyvinyl chloride film, polyvinylidene chloride film and polycarbonate film. Examples of the polyolefin film include polyethylene, polypropylene, poly-1-butene, poly-4-methyl-1-pentene, ethylene/propylene copolymer, ethylene/1-butene copolymer, ethylene/vinyl acetate copolymer, ethylene/ethyl acrylate copolymer and ethylene/vinyl alcohol copolymer. Examples of the polyester film include polyethylene terephthalate, polyethylene naphthalate and polybutylene terephthalate. Examples of the polyamide film include polyacrylate film, polystyrene film, nylon 6, nylon 6,6 and partially aromatic polyamide, The thickness of the film as described above is usually 4 to 100 µm and preferably approximately 4 so 25 µm.

The plastic base material can also be subjected to, if necessary, a release treatment, an antifouling treatment, an adhesion-faciltating treatment and an antistatic treatment, Examples of the release treatment and the antifouling treatment include treatments based on a release agent such as a silicone-based release agent, a fluorine-based release agent, a long chain alkyl-based release agent or a fatty acid amide-based release agent or a silica powder. Examples of the adhesion-facilitating treatment include an acid treatment, an alkali treatment, a primer treatment, a corona treatment, a plasma treatment and a ultraviolet treatment. Examples of the antistatic treatment include a coating type antistatic treatment, a kneading type antistatic treatment or a vapor deposition type antistatic treatment.

Examples of the constitutional material of the release film which can be used include thin leaf bodies such as a plastic film, a porous material, net, foam sheets, metal foil and laminated bodies of these. A plastic film is preferably used because of being excellent in surface smoothness. Examples of the plastic film include plastic films constituted with polyethylene, polypropylene and polyethylene terephthalate. Examples of the porous material include paper, cloth and non-woven fabric.

The plastic film is not particularly limited as long as the plastic film is capable of protecting the adhesive agent layers. Usable examples of the plastic film include polyethylene film, polypropylene film, polybutene film, polybutadiene film, polymethylpentene film, polyvinyl chloride film, vinyl chloride copolymer film, polyethylene terephthalate film, polybutylene terephthalate film, polyurethane film and ethylene-vinyl acetate copolymer film.

The release film may be subjected to, if necessary; a release treatment, an antifouling treatment and an antistatic treatment. Examples of the release treatment and the antifouling treatment include treatments based on a release agent such as a silicone-based release agent, a fluorine-based release agent, a long chain alkyl-based release agent or a fatty acid amide-based release agent or a silica powder. Examples of the antistatic treatment include a coating type antistatic treatment, a kneading type antistatic treatment or a vapor deposition type antistatic treatment. In particular, by appropriately applying a release treatment such as a silicone treatment, a long chain alkyl treatment and a fluorine treatment to the surface of the release film, the release property from each of the adhesive agent layers can be more upgraded.

+The thickness of the release film is usually 5 to 200 µm and preferably approximately 5 to 100 µm.

The thickness of the adhesive agent layer in the thermally conductive adhesive sheet of the present invention is preferably 20 µm to 5 mm, more preferably 50 µm to 2 mm and furthermore preferably 100 µm to 1 mm.

The thermally conductive adhesive sheet includes an acrylic polymer as the polymer component and hence has a high adhesive force. For example, when a peeling test is performed in relation to a SUS304 steel plate, at a peeling angle of 180° and at a peeling rate of 300 mm/min, the thermally conductive adhesive sheet has an adhesive force of 1.0 N/20 mm or more, preferably 3.0 N/20 and more preferably 5.0 N/20 mm or more. When the adhesive force to the SUS304 steel plate is 1.0 N/20 mm or more, even in the case where the thermally conductive adhesive sheet is used as bonded, for example, to the heat sink of a semiconductor module, the thermally conductive adhesive sheet can exhibit sufficient adhesive performance.

### EXAMPLES

Next, the present invention is described in more detail with reference to Examples. However, the present invention is not limited to these Examples.

### A. First Test

### 1. Examples and Comparative Examples

### Example 1

### 1. Preparation of Acrylic Resin Solution

In a reaction vessel equipped with a condenser tube, a nitrogen introduction tube, a thermometer and a stirrer, 100 parts by a weight of 2-ethylhexyl acrylate (2EHA), and 0.1 part by weight of a polymerization initiator (trade name: "Irgacure 651," manufactured by Ciba Japan K.K.) and 0.1 part by weight of a polymerization initiator (trade name: "Irgacure 184," manufactured by Ciba Japan K.K.) were placed and stirred. Then, the dissolved oxygen was removed by introducing nitrogen gas, and the resulting reaction mixture was irradiated with ultraviolet (UV) ray until the viscosity (BH viscometer, No. 5 rotor, 10 rpm, measurement temperature: 30°C) of the reaction mixture reached 10 Pa·s to yield a partially polymerized acrylic resin solution.

### 2. Preparation of Coating Liquid

A coating solution of the thermally conductive adhesive agent composition was obtained by adding 0.2 part by weight of trimethylolpropane triacrylate and 0.1 part by weight of a polymerization initiator (trade name: "Irgacure 184," manufactured by Ciba Specialty Chemicals Inc.) to 100 parts by weight of the acrylic resin solution and by stirring the resulting mixture.

### 3. Preparation of Thermally Conductive Adhesive Sheet

Next, the coating liquid was applied onto the release-treated side of a polyester film, used as a release film, with one side thereof release-treated with silicone (trade name: "Lumilar S-10#38," thickness: 38 µm, manufactured by Toray Industries, Inc.), by using a roll coater, to form an uncured adhesive agent layer. The coating liquid was applied so as for the thickness of the cured adhesive agent layer to be 50 µm. Then, the same release film as the aforementioned release film was bonded to the uncured adhesive agent layer in such a way that the release-treated side of the same release film as the aforementioned release film was brought into contact with the uncured adhesive agent layer. Both sides of the obtained laminated body were irradiated with ultraviolet ray (irradiance: 5 mW/cm²), respectively for 5 minutes, by using black light, to cure the uncured adhesive agent layer, and thus an adhesive agent layer was formed. In this way, a thermally conductive adhesive sheet (hereinafter, described as an adhesive sheet) having a 50-µm thick adhesive agent layer was obtained.

### Examples 2

An adhesive sheet was prepared in the same manner as in Example 1 except that 33 parts by weight of a boron nitride powder (trade name: "HP-40," manufactured by Mizushima Ferroalloy Co., Ltd.) as a thermally conductive substance was added to 100 parts by weight of the acrylic resin solution.

### Example 3

An adhesive sheet was prepared in the same manner as in Example 1 except that 40 parts by weight of a boron nitride powder (trade name "HP.40," manufactured by Mizushima Ferroalloy Co., Ltd.) as a thermally conductive substance was added to 100 parts by weight of the acrylic resin solution.

### Examples 4

An adhesive sheet was prepared in the same manner as in Example 1 except that butyl acrylate (BA) was used in place of 2-ethylhexyl acrylate (2EHA) used in the acrylic resin solution of Example 1 and 60 parts by weight of boron nitride was added as a thermally conductive substance.

### Comparative Example 1

An acrylic thermally conductive sheet (trade name: "HN-020.B," manufactured by Achilless Corp.) was used as an adhesive sheet.

### Comparative Example 2

A silicone-based thermally conductive sheet (trade name: "FSL-100B," manufactured by Denki Kagaku Kogyo K.K.) was used as an adhesive sheet.

### 2. Tests

### (Adhesive Force)

The release film on one side of the adhesive sheet of each of Examples and Comparative Examples was released, and a 25-µm thick PET film was bonded; the resulting PET film bonded sheet was cut to 20 mm × 150 mm to prepare an evaluation sample.
The release film was released from each of the obtained evaluation samples, and in an atmosphere of 23°C and a relative humidity of 50%, the evaluation sample was bonded to a SUS304 steel plate and was pressure bonded to the SUS304 steel plate with the aid of a back and forth movement of a 2-kg roller.
After a curing at 23°C for 30 minutes, a peeling test was performed for each of the bonded evaluation samples by using the universal tensile tester "TCM-1kNB" manufactured by Minebea Co., Ltd. to measure the adhesive force. The peeling angle was set at 180° and the peeling rate was set at 300 mm/min. The measurement results are as shown in Table 1 presented below.

### (Retention Property)

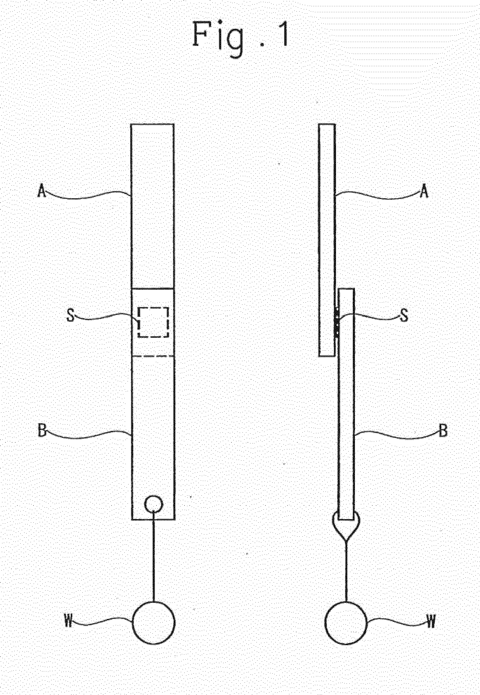

The adhesive sheet of each of Examples and Comparative Examples was cut to 15 mm × 15 mm to prepare an evaluation sample S.
From both sides of each of the evaluation samples S, the release films were released; in an atmosphere of 23°C and a relative humidity of 50%, a glass epoxy substrate A (23 mm × 125 mm) was bonded to one side of each of the evaluation samples S, and an aluminum substrate B (23 mm × 125 mm) was bonded to the other side of each of the evaluation samples S, and both substrates were pressure bonded in each of the evaluation samples S with the aid of a back and forth movement of a 2-kg roller.
Then, after a curing at 23°C for 30 minutes, the glass epoxy substrate A of each of the evaluation samples S was fixed to another member and a 300-g weight W was attached to the aluminum substrate B of each of the evaluations samples S; the evaluation samples S were allowed to stand at 80°C for 24 hours under the conditions shown in Fig. 1, and an evaluation was performed with respect to the occurrence/non-occurrence of the falling of the aluminum substrate B. The evaluation results are as shown in Table 1 presented below.

### (Contact Thermal Resistance)

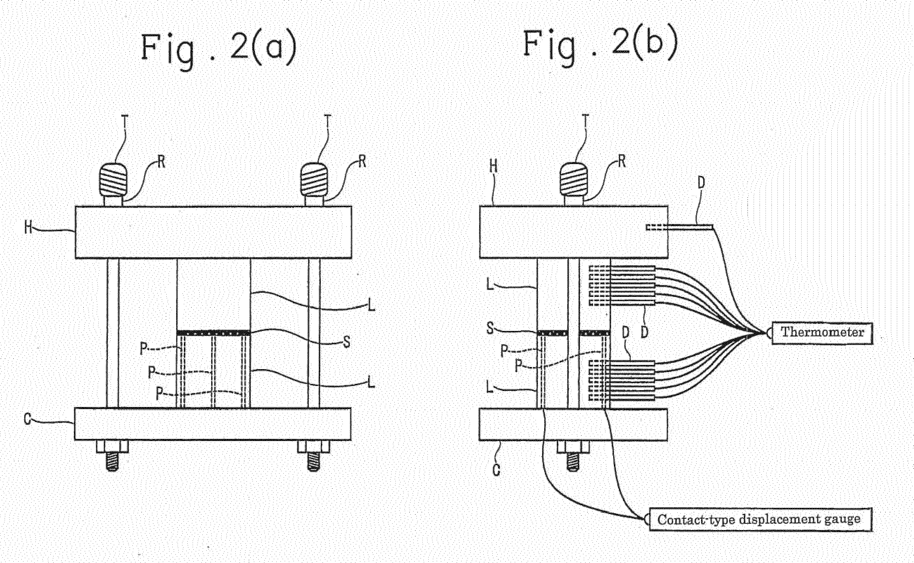

The measurement of the contact thermal resistance was performed by using the thermal property evaluation apparatus shown in Fig. 2.
Specifically, the adhesive sheet S (20 mm × 20 mm × 50 µm), in which the release films on both sides thereof were released, of each of Examples and Comparative Examples was sandwiched between a pair of aluminum rods L (A5052, thermal conductivity: 140 W/m·K) each formed so as to be a cube having an edge length of 20 mm, and thus the pair of rods L were bonded to each other with the aid of the adhesive sheet S.
Then, the pair of rods L were disposed between a heat generating body (heater block) H and a heat radiating body (a cooling base plate constituted so as to allow cooling water to circulate in the interior thereof) C in such a way that the pair of rods L were arranged vertically one under the other, Specifically, the heat generating body H was disposed on the upper rod L and the heat radiating body C was disposed under the lower rod L. In this case, the pair of rods L bonded to each other with the aid of the adhesive sheet S were positioned between a pair of pressure adjustment screws T penetrating through the heat generating body and the heat radiating body. A load cell R was disposed between each of the pressure adjustment screws T and the heat generating body H, so that the pressure at the time of tightening the pressure adjustment screw T can be measured. The pressure thus measured was used as the pressure exerted on the adhesive sheet S.
The three probes P (diameter: 1 mm) of a contact-type displacement gauge were disposed so as to penetrate through the lower rod L and the adhesive sheet S from the side of the heat radiating body C. In this case, the upper end of each of the probes was in a condition of being brought into contact with the lower side oaf the upper rod L, and thus the distance (the thickness of the adhesive sheet S) between the upper and lower rods L was able to be measured.
The heat generating body H and the upper and lower rods L were fitted with sensors D. Specifically, the temperature sensors D were fitted at a position in the heat generating body H, and at five positions in each of the rods L in a vertical direction at intervals of 5 mm.

The measurement of the contact thermal resistance was performed as follows.

### (1) Total Thermal Resistance

First, the pressure adjustment screws T were tightened to apply pressure to the adhesive sheet S, the temperature of the heat generating body H was set at 100°C and at the same time, cooling water at 20°C was circulated in the heat radiating body C.
Then, after the temperatures of the heat generating body H and the upper and lower rods L were stabilized, the temperatures of the upper and lower rods L were respectively measured with the individual temperature sensors D. From the thermal conductivities and the thermal gradients in the upper and lower rods L, the heat flux passing through the adhesive sheet S was derived, and the temperatures of the interfaces between the upper and lower rods L and the adhesive sheet S were derived. By using these values, the total thermal resistance (cm²·K/W) at the pressure concerned was derived. The pressure applied to the adhesive sheet S was set to fall within a range from 150 to 800 kPa, and the total thermal resistances at the pressures selected at intervals of 50 kPa in the pressure range concerned were derived.

### (2) Thermal Resistance of Adhesive Sheet Itself

The relation between the total thermal resistances at the respective pressures and the reciprocal values of the respective pressures was plotted to prepare an approximate straight line, and the total thermal resistance corresponding to the infinite pressure (in other words, corresponding to 1/pressure = 0) on the approximate straight line was taken as the thermal resistance of the adhesive sheet itself. Specifically, when the pressure was set at infinity, no air intervened between the adhesive sheet S and each of the upper and lower rods L, in other words, the contact thermal resistance was approximated to vanish, and hence the total thermal resistance in this case was taken as the thermal resistance of the adhesive sheet itself.

### (3) Contact Thermal Resistance

By subtracting the thermal resistance of the adhesive sheet itself from the total thermal resistance for the pressure set at 200 kPa, the contact thermal resistance (cm²·KW) at such a pressure was derived. The derived results of the contact thermal resistance are as shown in Table 1 presented below.

### (Heat Radiation Property)

Under the condition that the pressure applied to the adhesive sheet was set at 200 kPa, the temperature of the heat generating body H was measured with the temperature sensors D. The measurement results are as shown in Table 1 presented below.

### (Loss Elastic Modulus G")

From the adhesive sheet of each of Examples and Comparative Examples, the release films were released, and only the adhesive agent layer was laminated to prepare a 1.5 mm-thick measurement sample.
For each of the measurement samples, a measurement of the dynamic viscoelasticity was performed, and the loss elastic modulus G" was derived. For the measurement, the "Advanced Rheometric Expansion System(ARES)" manufactured by Rheometric Scientific, Inc. was used, and the conditions were such that the frequency was 1 Hz, the temperature range was from -50°C to 150°C, and the temperature increase rate was 5°C/min. The derived results of the loss elastic modulus G" are as shown in Table 1 presented below.

**[Table 1]**

| | Example 1 | Example 2 | Example 3 | Example 4 | Comparative Example 1 | Comparative Example 2 |
|---|---|---|---|---|---|---|
| Monomer | 2EHA | 2EHA | 2EHA | BA | Acrylic | Silicone-based |
| boron nitride | 0 part by weight | 33 parts by weight | 40 parts by weight | 60 parts by weight | 0 part by weight | 0 part by weight |
| Total thermal resistance (cm²·K/W) | 8.0 | 3.9 | 3.7 | 2.5 | 9.4 | 3.9 |
| Contact thermal resistance (cm²·K/W) | 0.0 | 0.0 | 0.1 | 0.4 | 0.7 | 0.2 |
| Adhesive force (N/20mm) | 10.3 | 8.9 | 8.5 | 7.5 | 1.3 | 0.08 |
| Temperature of heat generating body (°C), | 78.9 | 70.2 | 65.3 | 63.7 | 81.5 | 62.5 |
| Retention property test | No falling | No falling | No falling | No falling | No falling | Falling occurred |
| Loss elastic modulus G" (50°C) (Pa) | 0.9 × 10⁴ | 3.6 × 10⁴ | 1.1 x 10⁵ | 3.4 × 10⁵ | 6.5 × 10⁵ | - |
| Loss elastic modulus G" (70°C) (Pa) | 0.7 × 10⁴ | 2.7 × 10⁴ | 7.2 × 10⁴ | 2.7 × 10⁵ | 4.3 × 10⁵ | - |

As can be seen from a comparison of Examples 1 to 4 with Comparative Example 1, each of Examples more effectively decreased the temperature of the heat generating body H. In other words, the decrease of the contact thermal resistance reduces the air intervening between the adhesive sheet S and the adherend, hence the heat transfer to the beat radiating body C is efficiently performed and consequently it is made possible to effectively decrease the temperature of the heat generating body H.
It can also be seen that Examples 1 to 4 were lower in the loss elastic modulus G" at 50°C. In other words, the loss elastic modulus G" set to be low reduces the contact thermal resistance, and consequently it is made possible to effectively decrease the temperature of the heat generating body H.
As can be seen from a comparison of Examples 1 to 4 with Comparative Example 2, although the contact thermal resistances of Examples 1 to 4 and Comparative Example 2 were nearly equivalent to each other, the adhesive force in each of Examples was stronger than that of Comparative Example 2, and from the results of the retention property test, no falling was found in each of Examples. In other words, by forming the adhesive sheet S with the acrylic monomer, an adhesive sheet having a sufficient adhesive force can be formed.
As described above, the contact thermal resistance is 0.6 cm²·K/W or less when pressure bonded with a pressure of 200 kPa, hence the intervention of air between the adherend and the thermally conductive adhesive sheet can be suppressed, and consequently the contact area between the adherend and the thermally conductive adhesive sheet can be increased. Accordingly, the thermally conductive adhesive sheet becomes a thermally conductive adhesive sheet excellent in thermal conductivity. The formation of the adhesive agent layer with an acrylic monomer (in other words, an acrylic polymer component is included) allows the adhesive force to the adherend to be sufficient.

### B. Second Test

### Example 5

### 1. Preparation of Acrylic Resin Solution

In a reaction vessel equipped with a condenser tube, a nitrogen introduction tube, a thermometer and a stirrer, 100 parts by a weight of 2-ethylhexyl acrylate (2EHA), and 0.1 parts by weight of a polymerization initiator (trade name: "Irgacure 6561," manufactured by Ciba Japan K.K.) and 0.1 parts by weight of a polymerization initiator (trade name: "Irgacure 184," manufactured by Ciba Japan K.K.) were placed and stirred. Then, the dissolved oxygen was removed by introducing nitrogen gas, and the resulting reaction mixture was irradiated with ultraviolet (UV) ray until the viscosity (BH viscometer, No.5 rotor, 10 rpm, measurement temperature: 30°C) of the reaction mixture reached 10 Pa·s to yield a partially polymerized acrylic resin solution.

### 2. Preparation of Coating Liquid

A coating solution of the thermally conductive adhesive agent composition was obtained by adding 0.2 parts by weight of trimethylolpropane triacrylate, 0.1 parts by weight of a polymerization initiator (trade name: "Irgacure 184," manufactured by Ciba Specialty Chemicals Inc.) and 33 parts by weight of a boron nitride powder (trade name: "HP-40," manufactured by Mizushima Ferroalloy Co., Ltd.) to 100 parts by weight of the acrylic resin solution and by stirring the resulting mixture.

### 3. Preparation of Thermally Conductive Adhesive Sheet

Next, the coating liquid was applied onto the release-treated side of a polyester film with one side thereof release-treated with silicone (trade name: "Lumilar S-10 #38," thickness: 38 µm, manufactured by Toray Industries, Inc.), used as a release film, by using a roll coater, to form an uncured adhesive agent layer. The coating liquid was applied so as for the thickness of the cured adhesive agent layer to be 50 µm. Then, the same release film as the aforementioned release film was bonded to the uncured adhesive agent layer in such a way that the release-treated side of the same release film as the aforementioned release film was brought into contact with the uncured adhesive agent layer. Both sides of the obtained laminated body were irradiated with ultraviolet ray (irradiance: 5 mW/cm²), respectively for 5 minutes, by using black light, to cure the uncured adhesive agent layer, and thus an adhesive agent layer was formed. In this way, a thermally conductive adhesive sheet (hereinafter, described as an adhesive sheet) having a 50-µm thick adhesive agent layer was obtained.

### Example 6

An adhesive sheet was prepared in the same manner as in Example 5 except that 40 parts by weight of a boron nitride powder (trade name: "HP-40," manufactured by Mizushima Ferroalloy Co., Ltd.) was added to 100 parts by weight of the acrylic resin solution.

### Example 7

An was prepared in the same manner as in Example 5 except that butyl acrylate (BA) was used in place of 2-ethylhexyl acrylate (2EHA) used in the acrylic resin solution of Example 1 and 60 parts by weight of a boron nitride powder (trade name: "HP-40," manufactured by Mizushima Ferroalloy Co., Ltd.) was added as a thermally conductive substance.

### Comparative Example 3

An acrylic thermally conductive sheet (trade name: "HN-020-B," manufactured by Achilless Corp.) was used as an adhesive sheet.

### (Measurement of Complex Modulus of Elasticity G*)

The measurement of the complex modulus of elasticity G* at 100°C was performed by using a rheometer (ARES) manufactured by TA Instruments Inc. The measurement conditions are as follows.
- Distortion mode: Torsion
- Measurement frequency: 1 Hz (constant)
- Temperature increase rate: 5°C/min
- Measurement temperature: From around the glass transition temperature of the thermally conductive adhesive agent composition to 160°C
- Measurement jig: Parallel plate (diameter: 8.0 mm)

### (Measurement of Thermal Conductivity)

The measurement of the thermal conductivity of each of the adhesive sheets of Examples and Comparative Examples was performed. The thermal conductivity was derived by obtaining the thermal diffusivity with the "ai-Phase Mobile (trade name)" manufactured by ai-Phase Co., Ltd., and by multiplying the obtained thermal diffusivity by the heat capacity per unit volume of the adhesive sheet measured with a differential scanning calorimeter (DSC). The measurement results thus obtained are shown in Table 2 presented below.

### (Contact Thermal Resistance)

By using the same apparatus as in the first test and on the basis of the same method and the same conditions as in the first test, the total thermal resistance and the thermal resistance of the adhesive sheet itself were measured, and from these values the contact thermal resistance (cm²·K/W) was derived. The derived results of the contact thermal resistance are as shown in Table 2 presented below.

### (Heat Radiation Property)

On the basis of the same method and the same conditions as in the first test, the temperature of the heat generating body H was measured. The measurement results are as shown in Table 2 presented below.

**[Table 2]**

| | Example 5 | Example 6 | Example 7 | Comparative Example 3 |
|---|---|---|---|---|
| Monomer | 2EHA | 2EHA | BA | Acrylic |
| boron nitride | 33 part by weight | 40 parts by weight | 60 parts by weight | 0 part by weight |
| Complex modulus of elasticity G* | 7.1 × 10⁴ | 1.4 × 10⁵ | 5.3 × 10⁵ | 1.2 × 10⁵ |
| Contact thermal resistance (cm²·K/W) | 0.0 | 0.1 | 0.4 | 0.7 |
| Thermal conductivity (W/m·K) | 0.6 | 0.9 | 4.1 | 1.04 |
| Temperature of heat generating body (°C) | 70.2 | 65.3 | 63.7 | 81.5 |

As can be seen from a comparison of Examples 5 to 7 with Comparative Example 3, each of Examples constituted so as for the complex modulus of elasticity G* of the adhesive agent layer to be low was lower in contact thermal resistance. As can be seen, although Examples 5 and 6 were lower in thermal conductivity than Comparative Example 3, Examples 5 and 6 were lower in the temperature of the heat generating body than Comparative Example 3.
In other words, the constitution of the adhesive agent layer so as for the complex modulus of elasticity G* to be low allows the adhesive agent layer to be flexible, and hence when the thermally conductive adhesive sheet is pressure bonded to the adherend, the adhesive side of the adhesive agent layer is made to be easily adaptable to the surface of the adherend. Consequently, the intervention of air between the adhesive agent layer and the adherend is suppressed, and hence the heat transfer between the adherend and the thermally conductive adhesive sheet is effectively performed. Thus, as can be seen, the heat of the heat generating body is effectively transferred to the heat radiating body, and thus the temperature of the heat generating body can be effectively decreased.

## Claims

1. A thermally conductive adhesive sheet comprising an adhesive agent layer formed by molding a thermally conductive adhesive agent composition including an acrylic polymer component into a sheet-like shape, wherein the adhesive force at the time of 180° peeling is 1 N/20 mm or more and the contact thermal resistance is 0.6 cm²·K/Wor less when the adhesive sheet is pressure bonded to an adherent with a pressure of 200 kPa.

2. The thermally conductive adhesive according to claim 1,
wherein the thermally conductive adhesive agent composition further comprises a thermally conductive substance.

3. The thermally conductive adhesive sheet according to claim 1,
wherein the total thermal resistance is 8.0 cm²·K/W or less when the thermally conductive adhesive sheet is pressure bonded to an adherend with a pressure of 200 kPa.

4. The thermally conductive adhesive sheet according to claim 1,
wherein the adhesive agent layer has a loss elastic modulus G" at 50°C of 5 × 10⁵ Pa or less.

5. The thermally conductive adhesive sheet according to claim 1,
wherein the acrylic polymer component comprises as a monomer component an acrylic acid ester having an alkyl group of 2 to 14 carbon atoms in an amount of 50% or more.

6. The thermally conductive adhesive sheet according to claim 1,
wherein the thermal conductivity thereof is 0.5 W/m·K or more.

7. A thermally conductive adhesive sheet comprising an adhesive agent layer formed by molding a thermally conductive adhesive agent composition including an acrylic polymer component into a sheet-like shape, wherein the complex modulus of elasticity G* of the adhesive agent layer at 100°C is 1.0 × 10⁴ to 1.0 × 10⁶ Pa.

8. The thermally conductive adhesive sheet according to claim 7,
wherein the thermally conductive adhesive agent composition further comprises a thermally conductive substance.

9. The thermally conductive adhesive sheet according to claim 7,
wherein the total thermal resistance thereof is 8.0 cm².K/W or less when the thermally conductive adhesive sheet is pressure bonded with a pressure of 200 kPa to an adherend.

10. The thermally conductive adhesive sheet according to claim 7,
wherein the adhesive agent layer has a loss elastic modulus G" at 50°C of 5 × 10⁵ Pa or less.

11. The thermally conductive adhesive sheet according to claim 7,
wherein the acrylic polymer component comprises as a monomer component an acrylic acid ester having an alkyl group of 2 to 14 carbon atoms in an amount of 50% or more.

12. The thermally conductive adhesive sheet according tao claim 7, wherein the thermal conductivity thereof is 0.5 W/m·K or more.
